# EUROPEAN PATENT SPECIFICATION

(11) **EP 1 537 784 B1**
(45) Date of publication and mention of the grant of the patent: **02.04.2008**
(21) Application number: 04078269.0
(22) Date of filing: 01.12.2004
(51) Int. Cl.: A22C 7/00, A23P 1/08, A22C 25/22, A21C 3/06

(54) **Device and method for preparing compound food**
Vorrichtung und Verfahren zur Herstellung zusammengesetzter Nahrungsmittel
Dispositif et procédé de préparation de produits alimentaires composés

(30) Priority: 01.12.2003 NL 1024916
(43) Date of publication of application: 08.06.2005
(73) Proprietor: Technisch Buro Kortlever B.V., 4231 DJ Meerkerk (NL)
(72) Inventor: Kortlever, Willem, 4245 KG Leerbroek (NL); Kortlever, Gerard Marius, 4245 LA Leerbroek (NL)
(74) Representative: Valkonet, Rutger

(56) References cited:
- EP-A- 0 494 093
- US-A- 3 604 367
- US-A- 4 438 145
- US-A- 4 608 919

## Description

The present invention relates to a device for preparing a food product comprising a wrap and a stuffing, said device comprising a conveyor for conveying the stuffing present on the unfolded wrap in a direction of transport, said wrap having two opposed side flaps extending beyond the stuffing, perpendicularly to the direction of transport, and a longitudinal flap extending beyond the stuffing, parallel to the direction of transport, said device further comprising folding means for folding the side flaps over the stuffing on the conveyor and wrapping means for wrapping the longitudinal flap round the stuffing, which wrapping means comprise decelerating means disposed above the conveyor belt for decelerating the upper side of the stuffing and the wrap when the stuffing and the wrap are passed under the decelerating means on the conveyor, causing the stuffing and the wrap to rotate about an axis perpendicular to the direction of transport. Such devices are known, see e.g. US-A-4608919.

Food products comprising a wrap and a stuffing, for example kromeskies, are generally known, they are manually prepared by wrapping a wrap round a bar-shaped stuffing in two directions. As a rule, a wrap is first manually folded over the bar-shaped stuffing in the longitudinal direction, i.e. over the short sides. Following that, a further part of the wrap, or another wrap, is manually wrapped round the stuffing in a direction perpendicular to the first folding direction. A drawback that is encountered in manually preparing said food products comprising a wrap is the fact that the manual wrapping of the stuffing in two directions involves labourious and costly operations.

Also US patent No. 4,438,145 describes a device as referred to in the introduction for preparing a foodstuff, such as a kromesky, wherein a stuffing is placed on a wrap that is wider at one end than at another end. The device comprises a conveyor belt on which the wrap and the stuffing can be positioned, to which conveyor belt a curve can be imparted by means of rollers for the purpose of folding a wrap round a stuffing. Further rollers are provided for wrapping the stuffing and parts of the wrap that have been folded round the stuffing in the remainder of the wrap. Said further rollers are disposed above the conveyor belt, in parallel relationship therewith, and function to decelerate a product present on the conveyor belt that passes under said further rollers. The two further rollers serve to stop the wrap and the stuffing in their entirety above the conveyor belt, in such a manner that said wrap and said stuffing can undergo a rotating movement imparted thereto as a result of the wrap and the stuffing being moved forward at their bottom side by the conveyor. As a result, the stuffing and the side flaps, if present, are wrapped up in the remainder of the wrap. The device further comprises a time mechanism and a lift mechanism for actively lifting the rollers once the wrap has been wrapped round the stuffing so as to allow the product to move past the rollers. A drawback of such a device is in the first place the fact that the rollers, the time mechanism and the lifting mechanism are of complex construction and in the second place the fact that the rollers must be precisely adjusted relative to each other to prevent the device being blocked by an accumulation of products in front of the wrapping device. Consequently it is an object of the present invention to provide a device as referred to in the introduction that comprises wrapping means of simple design, and wherein the risk of products accumulating in front of said wrapping means is moreover eliminated, or at least reduced to a large extent. This object is accomplished with the device according to claim 1 wherein the decelerating means comprise a cloth-like material, which drags over the conveyor and which, if a food product is present between the conveyor and the cloth-like material, engages the upper side of said food product or causes it to decelerate. When a wrap with the side flaps already folded over the stuffing passes under the cloth-like material on the conveyor, the upper side thereof is decelerated relative to the conveyor movement. As a result, the front (downstream) part of the wrap and the stuffing are wrapped up in the remaining part of the wrap. The food product thus obtained will move on under the cloth-like material, albeit at a decelerated velocity, until it reaches the end of the cloth-like material, after which it will move further on the conveyor. The only adjustment that needs to be made is to ensure that the upper side of the product experiences sufficient resistance from the cloth-like material to decelerate the upper side of the product, but not so much as to stop the product altogether. It is not necessary to gear the adjustment of the cloth-like material to that of other elements of the device.

Preferably, the cloth-like material is a net or a gauze. The advantage of this is that the alternation of the net or gauze material and the openings present therebetween leads to a greater resistance and consequently to a larger engagement force on the intermediary product.

Furthermore, the decelerating means preferably comprise a plate disposed above the conveyor at a location further upstream of the cloth-like material, which plates slopes down in the direction of transport to a height above the conveyor which is less than the height of the food product that is being passed under said plate on the conveyor. The plate causes a first part of the wrap to be folded over the stuffing and the remaining part of the wrap, and the cloth-like material subsequently causes the product to be evenly wrapped up. The plate itself may be flexible or be suspended in a flexible manner. As a result, the plate exhibits some degree of flexibility relative to products that are being moved forward under the plate, so that products having a relatively low height will nevertheless be engaged and products having a relatively great height will not come to a complete standstill under the plate. Using this device, products having relatively constant dimensions can be obtained, which is advantageous in connection with possible subsequent automatic packaging of the products.

Preferably, the plate is provided with a ribbed profile near an end located at the side where the plate extends in the direction of the conveyor, which ribbed profile functions to engage the upper side of wraps with stuffings that pass under the plate on the conveyor. The ribbed profile provides an increased resistance, and consequently it is even more suitable for decelerating the upper side of the products that are being moved on the conveyor relative to the lower side.

According to the present invention, the folding means comprise guide means for guiding a conveyor belt forming part of the conveyor from a flat position to a partially bent position, in which partially bent position the side flaps extend above the stuffing so as to make it possible to fold the side flaps over the stuffing. The guide means bend the sides of the conveyor belt, which is moving in the direction of transport, in inward direction and ensure that the surface on which the side flaps are present bends over the short sides of the stuffing, as it were, after which the side flaps of the wrap drop on the upper side of the stuffing, for example due to the force of gravity.

According to the present invention, the conveyor belt is made of an elastic material to enable repeated stretching of the conveyor belt to the partially bent position and subsequent contraction thereof to the flat position. This enables the conveyor belt to readily adapt to the position in which the inwardly bent sides extend over the stuffing and subsequently to the position in which the conveyor belt takes up a substantially flat position, without this leading to permanent distortion of the conveyor belt.

Furthermore, the wrapping means are preferably arranged in the sequence of operations after the folding means. By maintaining this sequence, a food product comprising a wrap and a stuffing is obtained whose shape corresponds to the shape of the manually prepared embodiment of the food product. It is easier to cover the wrap for the short side with a wrap that is folded at right angles thereover than the other way round. This is important with a view to preventing leakage of the stuffing from the wrap, especially if subsequent preparation of the product involves heating of the product.

In a preferred embodiment of the invention, sorting means are disposed before the folding means for removing wraps whose shape does not conform to a desired shape. In the case of kromeskies, the desired shape is a T-shape, or at least a shape having side flaps and a longitudinal flap, which side flaps and which longitudinal flap may blend together. By removing flaps having incorrect dimensions before processing takes place on the conveyor, the number of food products that are rejected as a result of being poorly wrapped is reduced. Since the wrap and the stuffing are still separable during the stage that precedes processing thereof, the stuffing can be returned to a metering unit that places the stuffings on wraps on the conveyor belt. The sorting means may also be positioned such that they perform their function before the stuffing is placed on the wrap, or that the shape is scanned before wrapping takes place, whilst the products are not discharged until said wrapping has taken place. The sorting means may comprise any known sorting means suitable for scanning the shape of a wrap and transmitting the scanning result to an assessment unit. The assessment unit can simply be connected to a removing unit for removing products whose shape does not conform to the specified shape.

In another embodiment of the present invention, the folding means are of multiple construction for folding wraps that are being transported side by side in the direction of transport on said conveyor belt simultaneously over stuffings.

Preferably, a vacuum chamber is provided under the conveyor at the location of the folding means for generating a sub-atmospheric pressure under the conveyor. When the side flaps are being folded over the filling, the conveyor may exhibit a tendency to bulge at the bottom side. Said tendency can be compensated for by locally generating a sub-atmospheric pressure, as a result of which the conveyor will remain substantially flat at the bottom side, at least as far as the part on which the stuffing is present is concerned.

The present invention furthermore relates to a method for wrapping a wrap round a stuffing so as to obtain a food product comprising a wrap and a stuffing, wherein the wrapping process is carried out by means of a device for preparing a food product comprising a wrap and a stuffing as described in the foregoing. The advantages of such a method are analogous to the advantages of the device in question.

The present invention will now be explained in more detail, purely by way of example, in the description hereinafter in conjunction with the appended figures of embodiments according to the invention.
Fig. 1a is a perspective view of a device for preparing a kromesky;
Fig. 1b is a side elevation of the device of Fig. 1a;
Fig. 2 is a detailed perspective view of a conveyor belt comprising folding means for preparing kromeskies;
Figs. 3a-3d are side elevations of wrapping means according to the present invention, showing successive steps of the wrapping of a food product;
Fig. 4 is a perspective view of a device according to the present invention, which device comprises a number of parallel folding means and an ejector belt for rejected products; and
Fig. 5 is a sectional view of the conveyor and folding means of a device provided with a vacuum chamber.

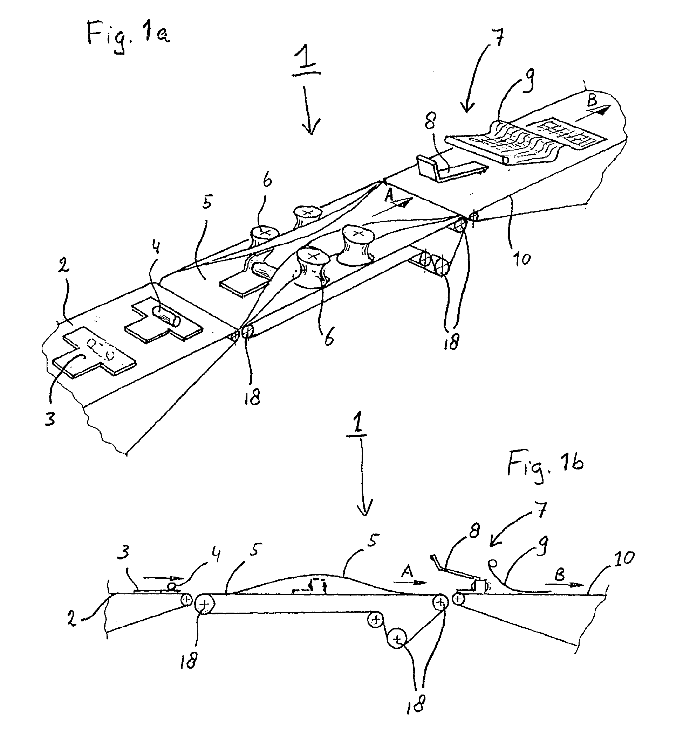

Figs. 1a and 1b show a device 1 for preparing kromeskies as a food product comprising a wrap, in this case a thin slice of bacon 3, and a stuffing, in this case a meat stuffing 4, which device comprises a supply line 2 for supplying thin slices of bacon 3 with a meat stuffing 4 present thereon to an endless conveyor belt 5 that is passed over pulleys 18, which conveyor belt is provided with diabolo-shaped guide means 6 for the conveyor belt 5, and subsequently to wrapping means 7 comprising a plate 8 and a net 9 disposed above a discharge line 10.

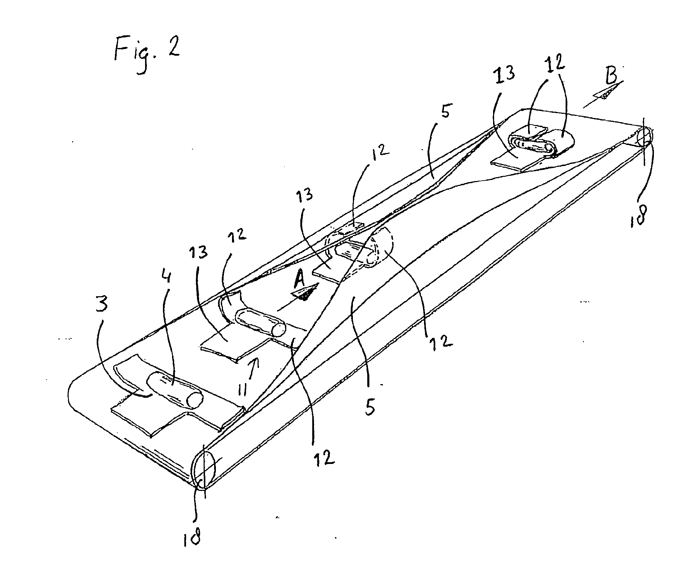

Fig. 2 shows in more detail the conveyor belt 5 of Figs. 1a and 1b, on which a thin slice of bacon the 3 is folded over a meat stuffing 4 to form an intermediary product 11 consisting of a meat stuffing 4, over which the side flaps 12 of a thin slice of bacon 3 are folded, whereas the longitudinal flab 13 is still present in unfolded condition on the conveyor belt 5. The guide means for the conveyor belt are not shown in this figure so as to visualise more clearly the manner in which the conveyor belt 5 folds the side flaps 12 of a wrap 3 over the meat stuffing (illustrated in dotted lines in this figure).

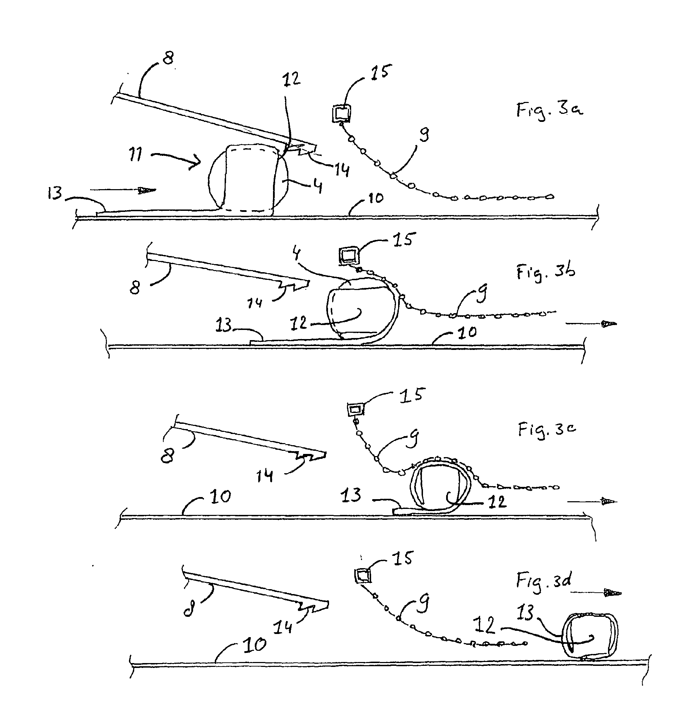

In Figs. 3a-3d the operation of the wrapping means is illustrated in more detail by showing in four successive steps (Figs. 3a, 3b, 3c and 3d, respectively) the operations to which a thin slice of bacon 3 with a meat stuffing 4 present thereon is subjected upon passing the wrapping means. The figures show the manner in which the various wrapping means engage the meat so as to wrap up the meat stuffing in the longitudinal flap 13, which figures show that the plate 8 has a ribbed profile 14 near the end that extends in the direction of the conveyor belt 5, and that the net 9 is suspended from a beam 15 above the aforesaid end of the plate 8.

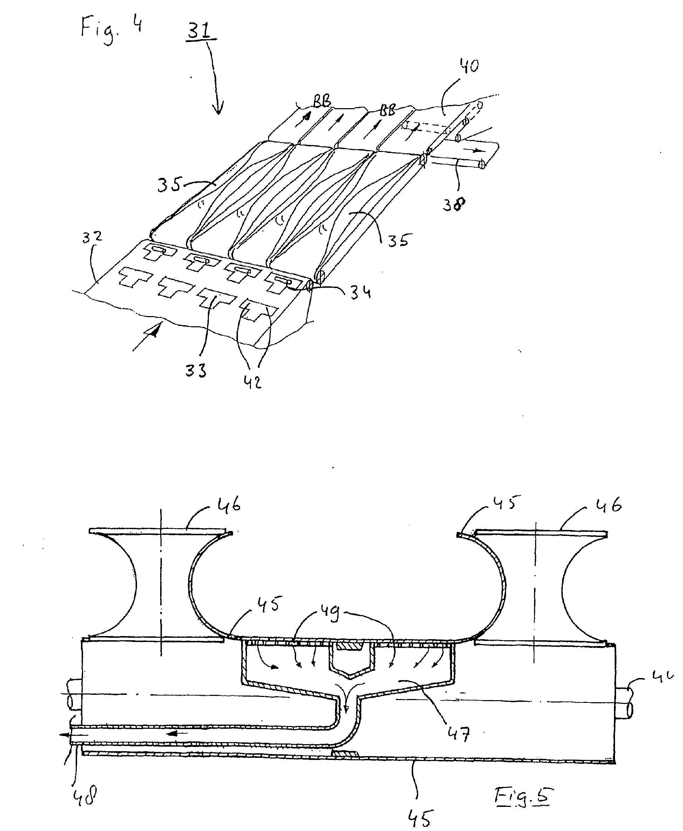

Fig. 4 shows a supply line 32 for supplying four thin slices of bacon 33 lying side by side with a meat stuffing 34 present thereon for processing thereof by four parallel conveyor belts 35 comprising guide means (not shown in Fig. 4), the operation of which parallel conveyor belts 35 and which guide means is identical to that of the conveyor belt 5 and the guide means 6 of Figs. 1a, 1b and 2. Furthermore, retractable discharge belts 40 are shown. Finally, an ejector belt 38 is shown, which functions to eject rejected products.

Fig. 5 finally shows a sectional view of a conveyor belt 45 which is passed over a pulley 44 and which is guided by diabolo-shaped guides 46. Present between a lower part and an upper part of the conveyor belt 45 is a vacuum chamber 47, which is provided with an air intake channel 48 and which is provided with perforations 49 at the upper side for drawing off air that is present between the belt 45 and the vacuum chamber 47.

Referring to Fig. 1, there is shown a device 1 for preparing kromeskies consisting of a meat stuffing 4 wrapped in a thin slice of bacon 3. A slice of bacon 3 has been placed on a supply line 2 and is scanned first for establishing the presence of a correctly shaped thin slice of bacon 3 on the supply line 2. Following that, a meat stuffing 4 is laid on the thin slice of bacon 3 (this step is not shown), and the thin slice of bacon 3 with the meat stuffing 4 present thereon is positioned on a conveyor belt 5. The conveyor belt 5 is an endless belt passed over pulleys 18, one of which is driven by a motor (not shown) for moving the conveyor belt 5 in the direction indicated by the arrow A. From the point at which the thin slice of bacon 3 with the meat stuffing 4 present thereon is placed onto the conveyor belt 5, the conveyor belt 5 conveys the meat in the direction indicated by the arrow A, with the sides of the belt being bent upwards and inwards by the diabolo-shaped guide means 6, after which the belt, having returned to its entirely flat position again, moves towards the wrapping means 7.

Fig. 2 shows more clearly and in more detail that by bending the conveyor belt 5 in this manner, the side flaps 12 of a thin slice of bacon 3 are moved to a position above the meat stuffing 4, where the side flaps 12 fall onto the meat stuffing 4. The intermediary product 11 thus formed is moved forward in the direction indicated by the arrow A for further processing. The intermediary product 11 consists of a meat stuffing 4 present on a thin slice of bacon 3, whose side flaps 12 are folded over the meat stuffing 4 but whose longitudinal flab 13 is still present in unfolded condition on the conveyor belt 5.

Reverting to Figs. 1a and 1b, an intermediary product 11 is shown to be transported to and moved onto a discharge line 10 by the conveyor belt 11, after which the discharge line 10 moves the intermediary product 11 in the direction indicated by the arrow B. As is clearly shown also in Figs. 3a-3d, the intermediary product is thereby moved to a position under a plate 8 that slopes down in the direction indicated by the arrow B from a position above the discharge line 10 to an end having a ribbed profile 14, which is disposed some distance above the discharge line 10, which distance is less than the height of the intermediary product 11. The discharge line 10 moves in the direction indicated by the arrow B and carries along the intermediary product 11, the upper side of which is stopped, or at least decelerated, by the ribbed profile 14 at the end of the plate 8. As a result, the intermediary product 11 undergoes a rotating movement in anti-clockwise direction, thus starting the process of wrapping up the intermediary product 11 into a kromesky. In Fig. 3b, the intermediary product 11 has largely passed the ribbed profile 14 of the plate 8, but the meat stuffing 4 is not completely wrapped up in the longitudinal flap 13 yet. The wrapping movement is completed by a net 9, which drags over the discharge conveyor 10 and which engages the upper side of an intermediary product 11 upon passage thereof on the discharge conveyor 10, and which as such has a decelerating effect on the upper side of the intermediary product in question as well. As a result, the rotation in anti-clockwise direction is continued (see Fig. 3c) until the longitudinal flap 12 is fully wrapped round the meat stuffing, forming a completed kromesky (Fig. 3c).

As Fig. 4 shows, a device 31 according to the present invention may be made up of a supply line 32 for supplying a number of thin slices of bacon 33 with a meat stuffing 34 present thereon in side-by-side relationship to a number of parallel conveyor belts 35 for folding the side flaps 42 of thin slices of bacon 33 over the meat stuffing, after which the intermediary products thus formed (not shown in Fig. 4) are placed on a discharge line 40 in the direction indicated by the arrow BB for further processing into kromeskies, for example in a manner as shown in the preceding figures. The first part of the discharge conveyor 40 can be retracted (illustrated in dotted lines) when it is detected that an incorrectly shaped intermediary product (not shown) is being delivered by the corresponding conveyor belt 35. Disposed under the discharge lines 40 is an ejector belt 38, on which intermediary products that have been rejected, for example because it has been detected that the wrap does not have the correct shape, are further discharged.

Fig. 5 finally shows the manner in which the upper part of the conveyor belt 45 is maintained in a flat position at the location of the diabolo-shaped guides 46. When the upper part of the conveyor belt 45 is passed through the diabolo-shaped guides for the purpose of folding the wrap round the stuffing if such a wrap and stuffing (not shown) are present, the lower side of the upper part of the conveyor belt 45 may tend to assume a slightly convex position, i.e. the bottom face of the conveyor belt 45 tends to move upwards. By generating a sub-atmospheric pressure in the vacuum chamber 47 via the suction channel 48, air that may be present between the upper side of the vacuum chamber 47 and the bottom side of the upper part of the conveyor belt 45 is drawn off through the openings 49, as a result of which the bottom side of the upper part of the conveyor belt 45 will extend in a more or less flat position.

It will be understood that the embodiments as shown and described above merely function to illustrate the present invention without limiting the scope thereof, which is defined by the appended independent claims 1 and 9. Thus, the wrap may be composed of a number of parts that jointly exhibit the desired shape, whilst the wrap may also have a shape such that the side flaps and the longitudinal flap fit therein, for example a circular shape of the shape of a cabbage leaf in which a stuffing is to be wrapped. Furthermore, the wrapping device may be used independently of the folding device.

## Claims

1. A device for preparing a food product comprising a wrap (3) and a stuffing (4), said device comprising a conveyor for conveying the stuffing present on the unfolded wrap in a direction of transport, said wrap (3) having two opposed side flaps (12) extending beyond the stuffing, perpendicularly to the direction of transport, and a longitudinal flap (13) extending beyond the stuffing, parallel to the direction of transport, said device further comprising folding means ((5, 6) for folding the side flaps (12) over the stuffing (4) on the conveyor and wrapping means (8, 9) for wrapping the longitudinal flap (13) round the stuffing (4), which wrapping means comprise decelerating means (9), wherein the decelerating means (9) comprise a cloth-like material, which drags over the conveyor and which, if a food product is present between the conveyor and the cloth-like material (9), engages the upper side of said food product or causes it to decelerate and are disposed above the conveyor belt for decelerating the upper side of the stuffing and the wrap when the stuffing and the wrap are passed under the decelerating means on the conveyor causing the stuffing and the wrap to rotate about an axis perpendicular to the direction of transport, the folding means (5, 6) comprising guide means (6) for guiding a conveyor belt (5) forming part of the conveyor from a flat position to a partially bent position, in which partially bent position the side flaps (12) extend above the stuffing so as to make it possible to fold the side flaps (12) over the stuffing, the conveyor belt (5) being made of an elastic material to enable repeated stretching of the conveyor belt (5) to the partially bent position and subsequent contraction thereof to the flat position.

2. A device according to claim 1, **characterized in that** said cloth-like material (9) is a net or a gauze.

3. A device according to claim 1, **characterized in that** the decelerating means also comprise a plate (8) disposed above the conveyor at a location further upstream of the cloth-like material (9), which plate (8) slopes down in the direction of transport to a height above the conveyor which is less than the height of the food product that is being passed under said plate on the conveyor.

4. A device according to claim 2, **characterized in that** the plate (8) is provided with a ribbed profile (14) near an end located at the side where the plate (8) extends in the direction of the conveyor, which ribbed profile (14) functions to engage the upper side of wraps with stuffings that pass under the plate on the conveyor.

5. A device according to any one of the preceding claims, **characterized in that** said wrapping means (8,9) are arranged in the sequence of operations after the folding means.

6. A device according to any one of the preceding claims, **characterized in that** sorting means are disposed before the folding means for removing wraps (3) whose shape does not conform to a desired shape.

7. A device according to any one of the preceding claims, **characterized in that** the folding means are of multiple construction for folding wraps (3) that are being transported side by side in the direction of transport on said conveyor belt simultaneously over stuffings.

8. A device according to any one of the preceding claims, **characterized in that** a vacuum chamber (47) is provided under the conveyor (5) at the location of the folding means for generating a sub-atmospheric pressure under the conveyor.

9. A method for wrapping a stuffing (4) in a wrap (3) so as to obtain a food product comprising a wrap (3) and a stuffing (4), **characterized in that** said wrapping is carried out by means of a device according to any one of the preceding claims.

## Patentansprüche

1. Eine Vorrichtung zur Zusammenstellung eines Lebensmittelproduktes, welches eine Verpackung (3) und ein Erzeugnis (4) aufweist, wobei die Vorrichtung ein Fördermittel zur Beförderung des Erzeugnisses aufweist, bestehend aus der noch offenen Verpackung in einer Transportrichtung, die Verpackung (3) weist zwei sich gegenüberliegende Seitenlaschen (12) auf, welche sich über das Erzeugnis senkrecht zur Transportrichtung hinaus erstrecken, sowie eine längliche Lasche (13), welche sich über das Erzeugnis parallel zur Transportrichtung hinaus erstreckt, weiterhin weist die Vorrichtung Faltmittel (5, 6), zur Faltung der Seitenlaschen (12) über das Erzeugnis (4) auf dem Förderband auf und Umwicklungsmittel (8, 9), zur Umwicklung der länglichen Lasche (13) um das Erzeugnis (4) herum, wobei die Umwicklungsmittel Verzögerungsmittel (9) aufweisen, worin die Verzögerungsmittel (9) ein gewebeähnliches Material aufweisen, welches über das Förderband schleift und welches, wenn ein Lebensmittelprodukt zwischen dem Laufband und dem Gewebematerial (9) angeordnet ist, die obere Seite des Lebensmittelproduktes kontaktiert oder dieses zum Abbremsen veranlasst und sind über dem Transportband zur Abbremsung der oberen Seite des Erzeugnisses und der Verpackung angeordnet, wenn das Erzeugnis und die Verpackung unter den Verzögerungsmitteln auf dem Förderband durchgelaufen ist, und das Erzeugnis und die Verpackung zur Rotation um eine senkrechte Achse zur Transportrichtung veranlasst, die Faltmittel (5, 6) weisen Führungsmittel (6) zur Führung eines Transportbandes (5) auf, welches ein Teil des Förderbandes von einer ebenen Position zu einer teilweisen gebogenen Position umformt, in welcher Biegeposition die Seitenlaschen (12) teilweise sich oberhalb des Erzeugnisses erstrecken, um ein Falten der Seitenlaschen (12) über das Erzeugnis zu ermöglichen, wobei das Transportband (5) aus einem elastischen Material hergestellt ist und ein wiederholtes Strecken des Transportbandes (5) zu der teilweisen Biegeposition und der anschließenden Verkürzung zur ebenen Position ermöglicht.

2. Eine Vorrichtung nach Anspruch 1, **dadurch gekennzeichnet, dass** das gewebeähnliche Material (9) ein Netz oder ein Gewirk ist.

3. Eine Vorrichtung nach Anspruch 1, **dadurch gekennzeichnet, dass** die Verzögerungsmittel ferner ein Blech (8) aufweisen, welches oberhalb des Förderbandes angeordnet ist, an einer Position, weiter oberhalb des gewebeähnlichen Materials (9), welches Blech (8) schräg nach unten in Transportrichtung gerichtet ist, in einer Höhe, oberhalb des Förderbandes, welches kleiner als die Höhe des Lebensmittelproduktes ist, so dass es unter dem Blech auf dem Förderband hindurchläuft.

4. Eine Vorrichtung nach Anspruch 2, **dadurch gekennzeichnet, dass** das Blech (8) mit einem gerippten Profil (14) in der Nähe eines Endes ausgestattet ist, an der Seite angeordnet, wo sich das Blech (8) in Richtung des Transportbandes erstreckt, wobei die Funktion des gerippten Profils (14) zur Kontaktierung der unteren Seite der Verpackungen mit Erzeugnissen ist, welche unter dem Blech auf dem Transportband hindurch laufen.

5. Vorrichtung nach einem der vorhergehenden Ansprüche, **dadurch gekennzeichnet, dass** die Umwicklungsmittel (8, 9) in der Ablauffolge nach den Faltmitteln angeordnet sind.

6. Eine Vorrichtung nach einem der vorhergehenden Ansprüche, **dadurch gekennzeichnet, dass** Sortiermittel vor den Faltmitteln zur Entfernung von Verpackungen (3) angeordnet sind, deren Form nicht die erwünschte Form aufweist.

7. Eine Vorrichtung nach einem der vorhergehenden Ansprüche, **dadurch gekennzeichnet, dass** die Faltmittel einen Mehrfachaufbau für Faltverpackungen aufweisen, welche nebeneinander in Transportrichtung auf dem Transportband und gleichzeitig über die Erzeugnisse transportiert werden.

8. Eine Vorrichtung nach einem der vorhergehenden Ansprüche, **dadurch gekennzeichnet, dass** eine Vakuumkammer (47) unterhalb des Förderbandes (5) zur Verfügung gestellt ist, wo die Faltmittel zur Entwicklung eines Unterdrucks unter dem Förderband angeordnet sind.

9. Ein Verfahren zur Umwicklung eines Erzeugnisses (4) in einer Verpackung (3) zur Erhaltung eines Lebensmittelproduktes, welches eine Verpackung (3) und ein Erzeugnis (4) aufweist, **dadurch gekennzeichnet, dass** die Umwicklung durch Mittel einer Vorrichtung gemäß nach einem der vorhergehenden Ansprüche ausgeführt werden.

## Revendications

1. Dispositif de préparation d'un produit alimentaire comprenant une enveloppe (3) et une garniture (4), ledit dispositif comprenant un tapis roulant pour transporter la garniture présente sur l'enveloppe dépliée dans une direction de transport, ladite enveloppe (3) présentant deux rabats latéraux opposés (12) s'étendant au-delà de la garniture, perpendiculairement à la direction de transport, et un rabat longitudinal (13) s'étendant au-delà de la garniture, parallèlement à la direction de transport, ledit dispositif comprenant en outre un système de pliage (5, 6) pour plier les rabats latéraux (12) sur la garniture (4) sur le tapis roulant et un système d'enveloppement (8, 9) pour envelopper le rabat longitudinal (13) autour de la garniture (4), ledit système d'enveloppement comprenant un système de ralentissement (9), le système de ralentissement (9) comprenant un matériau semblable à un tissu, qui vient sur le tapis roulant et qui, si un produit alimentaire est présent entre le tapis roulant et le matériau semblable à un tissu (9), met en prise le côté supérieur dudit produit alimentaire ou le fait ralentir et est disposé au-dessus de la courroie transporteuse pour ralentir le côté supérieur de la garniture et de l'enveloppe lorsque la garniture et l'enveloppe passent sous le système de ralentissement sur le tapis roulant, faisant pivoter la garniture et l'enveloppe autour d'un axe perpendiculaire à la direction de transport, le système de pliage (5, 6) comprenant un système de guidage (6) pour guider une courroie transporteuse (5) faisant partie du tapis roulant depuis une position plate vers une position partiellement courbée, dans laquelle les rabats latéraux (12) s'étendent au-dessus de la garniture de manière à permettre de plier les rabats latéraux (12) sur la garniture, la courroie transporteuse (5) étant composée d'un matériau élastique pour permettre un étirement répété de la courroie transporteuse (5) dans la position partiellement courbée et une contraction ultérieure de celle-ci dans la position plate.

2. Dispositif selon la revendication 1, **caractérisé en ce que** ledit matériau semblable à un tissu (9) est un filet ou une gaze.

3. Dispositif selon la revendication 1, **caractérisé en ce que** le système de ralentissement comprend également une plaque (8) disposée au-dessus du tapis roulant en un endroit plus en amont par rapport au matériau semblable à un tissu (9), ladite plaque (8) descendant dans la direction de transport à une hauteur supérieure au tapis roulant dont la hauteur est inférieure à celle du produit alimentaire qui est en train de passer sous ladite plaque sur le tapis roulant.

4. Dispositif selon la revendication 2, **caractérisé en ce que** la plaque (8) est dotée d'un profil nervuré (14) près d'une extrémité située au niveau du côté où la plaque (8) s'étend dans la direction du tapis roulant, ledit profil nervuré (14) fonctionnant de manière à mettre en prise le côté supérieur des enveloppes avec des garnitures qui passent sous la plaque sur le tapis roulant.

5. Dispositif selon l'une quelconque des revendications précédentes, **caractérisé en ce que** ledit système d'enveloppement (8, 9) est disposé dans la séquence d'opérations après le système de pliage.

6. Dispositif selon l'une quelconque des revendications précédentes, **caractérisé en ce qu'**un système de tri est disposé avant le système de pliage pour enlever les enveloppes (3) dont la forme n'est pas conforme à une forme souhaitée.

7. Dispositif selon l'une quelconque des revendications précédentes, **caractérisé en ce que** le système de pliage est d'une construction multiple pour plier des enveloppes (3) qui sont transportées côte à côte dans la direction de transport sur ladite courroie transporteuse simultanément sur les garnitures.

8. Dispositif selon l'une quelconque des revendications précédentes, **caractérisé en ce qu'**une chambre à vide (47) est prévue sous le tapis roulant (5) au niveau de la position du système de pliage pour générer une pression sub-atmosphérique sous le tapis roulant.

9. Procédé d'enveloppement d'une garniture (4) dans une enveloppe (3) de manière à obtenir un produit alimentaire comprenant une enveloppe (3) et une garniture (4), **caractérisé en ce que** ledit enveloppement est réalisé au moyen d'un dispositif selon l'une quelconque des revendications précédentes.
